# FASCICULE DE BREVET EUROPEEN

(11) **EP 2 128 022 B1**
(45) Date de publication et mention de la délivrance du brevet: **14.11.2012**
(21) Numéro de dépôt: 09160332.4
(22) Date de dépôt: 15.05.2009
(51) Int. Cl.: B60N 2/06, B60N 2/07, B60N 2/60, B64D 11/06

(54) **Dispositif de raccordement électrique pour des liaisons siège à siège**
Elektrisches Anschlusssystem für die Sitz-zu-Sitz-Verbindungen
Electrical connection device for seat-to-seat links

(30) Priorité: 20.05.2008 FR 0853254
(43) Date de publication de la demande: 02.12.2009
(73) Titulaire: RADIALL, 93116 Rosny-Sous-Bois (FR)
(72) Inventeur: Van der Mee, Marnix, 37270 Montlouis sur Loire (FR); Demaret, Emmanuel, 37100 Tours (FR)
(74) Mandataire: Leszczynski, André

(56) Documents cités:
- EP-A- 1 737 095
- WO-A-2005/094290
- US-A1- 2004 017 648
- US-A1- 2005 095 903
- US-A1- 2005 247 820
- US-A1- 2006 097 109

## Description

La présente invention a pour objet un dispositif de raccordement électrique pour des liaisons siège à siège, notamment pour des sièges d'aéronefs. Les sièges connus utilisés dans les aéronefs comportent un équipement électronique faisant partie, par exemple, du système de divertissement intégré au siège. Cet équipement est relié à deux connecteurs respectivement situés à l'avant et à l'arrière du siège pour assurer le raccordement électrique avec les sièges des rangées précédentes et suivantes.

Un tel système met par conséquent en jeu deux couples de connecteurs par siège, un couple entrant et l'autre sortant, ce qui peut poser des problèmes en termes de masse et de coût, tout en dégradant le blindage et en augmentant les pertes au niveau de la ligne électrique par ajout de connexions.

Le connecteur avant d'un siège est relié par l'intermédiaire d'un tronçon d'un faisceau de câbles au connecteur arrière du siège précédent. Du fait des valeurs élevées des rayons de courbure minimum acceptés par les câbles, il est nécessaire de dimensionner le tronçon de faisceau de câbles reliant le connecteur avant du siège au connecteur arrière du siège de la rangée précédente sur mesure pour une utilisation précise. Une telle solution ne permet par conséquent pas d'obtenir une modularité dans la connexion entre deux rangées de sièges lors de l'installation de ces derniers et de modifier à volonté et rapidement les configurations de sièges entre la classe affaires et la classe économique par exemple dans les avions selon un usage ponctuel.

Des exemples de l'art antérieur sont fournis par les documents EP 1 737 095, WO 2005/094290, US 2005/0095903.

L'invention a pour but de remédier aux inconvénients précités et y parvient grâce à un dispositif de raccordement électrique entre un premier siège et un second siège, disposé devant ou derrière le premier siège, notamment dans un aéronef, selon la revendication 1.

Par « boîtier solidaire du premier siège », il faut comprendre un boîtier rigidement fixé, de façon amovible ou non, sur le premier siège.

Avec un dispositif de raccordement selon l'invention, un même système peut être très facilement utilisé pour des pas de siège variant de plus ou moins 25 cm avec des câbles ayant un rayon de courbure minimum relativement important.

Par ailleurs, le dispositif de raccordement électrique selon l'invention permet de n'utiliser qu'un seul couple de connecteurs pour réaliser le raccordement électrique entre deux sièges.

Le boîtier étant solidaire du premier siège, il peut être monté en même temps que ce dernier sans qu'il soit nécessaire d'installer le boîtier avant d'installer les sièges.

Par ailleurs, le boîtier peut n'être pas reçu dans le plancher de l'aéronef, mais simplement posé dessus, ce qui peut éviter d'avoir à aménager le plancher de l'aéronef.

La baguette est avantageusement entièrement rétractable à l'intérieur du boîtier.

En variante, la baguette peut n'être rétractable qu'en partie seulement à l'intérieur du boîtier, n'étant par exemple rétractable que sur 60 % environ de sa longueur.

La baguette s'étend par exemple sur une longueur comprise entre 0 et 50 cm.

Le faisceau de câbles de sortie présente avantageusement une réserve de câbles dans le boîtier, cette réserve de câbles leur permettant d'accompagner le déplacement de la baguette tout en conservant un rayon de courbure minimum acceptable.

On désigne par « réserve de câbles », le volume de câbles en excès lorsque la baguette est rétractée à l'intérieur du boîtier.

Les câbles utilisés ont par exemple un rayon de courbure minimum de l'ordre de 25 mm.

Le boîtier peut être configuré pour être posé verticalement ou horizontalement sur le plancher de l'aéronef.

Le dispositif comporte avantageusement un équipement électronique connecté au faisceau de câbles d'entrée et de sortie, cet équipement électronique étant par exemple intégré au boîtier. En variante, l'équipement électronique est distinct du boîtier et est connecté à celui-ci.

Le dispositif de raccordement comporte avantageusement un cache apte à recouvrir la baguette lorsque celle-ci est déployée à l'extérieur du boîtier.

Les premier et second sièges font par exemple partie respectivement de rangées de sièges successives de l'aéronef.

La baguette rétractable comporte une succession d'éléments articulés les uns par rapport aux autres et recevant le faisceau de câbles de sortie sur au moins une portion de sa la longueur. Cette succession d'éléments définit par exemple un système de chenille et peut permettre de contrôler la courbure des câbles du faisceau, permettant avantageusement de maintenir ladite courbure dans une plage de valeurs prédéfinie.

Le boîtier comporte avantageusement une piste sur laquelle le système de chenille peut coulisser lorsque la baguette est déplacée.

D'autres caractéristiques et propriétés avantageuses de l'invention apparaitront à la description qui va suivre d'exemples de mise en oeuvre non limitatifs de celle-ci, et à l'examen du dessin annexe sur lequel :
- les figures 1 et 2 représentent différentes configurations d'un premier exemple de dispositif de raccordement électrique,
- la figure 3 représente l'ajout d'un cache au dispositif selon les figures 1 et 2,
- les figures 4 et 5 sont des vues en transparence des figures 1 et 2,
- la figure 6 représente un autre exemple de réalisation d'un dispositif de raccordement électrique selon l'invention,
- la figure 7 représente une variante du dispositif selon la figure 5.
- la figure 8 représente une autre variante du dispositif selon la figure 1,
- les figures 9 et 10 sont des vues en transparence du dispositif selon la figure 8 dans deux configurations différentes,
- la figure 11 représente une autre variante du dispositif selon la figure 1,
- les figures 12 et 13 sont des vues en transparence du dispositif selon la figure 11 dans deux configurations différentes, et
- la figure 14 représente une variante du dispositif selon la figure 11

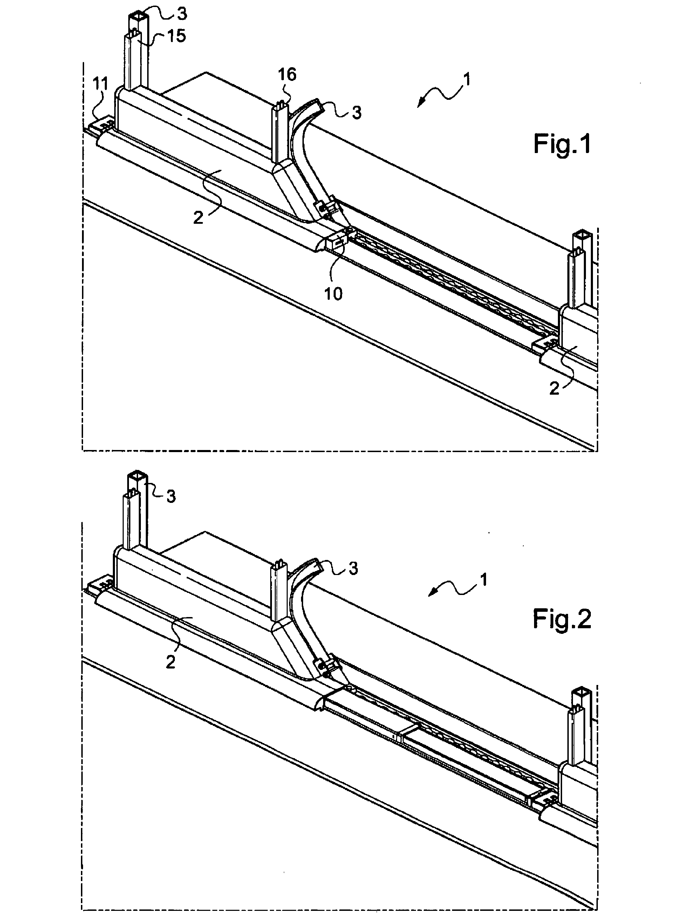

On a représenté à la figure 1 un premier exemple de dispositif de raccordement électrique désigné globalement par 1 entre un premier siège et un second siège.

Ce dispositif comporte un boîtier 2 solidaire d'un premier siège dont on n'a représenté que les pieds 3.

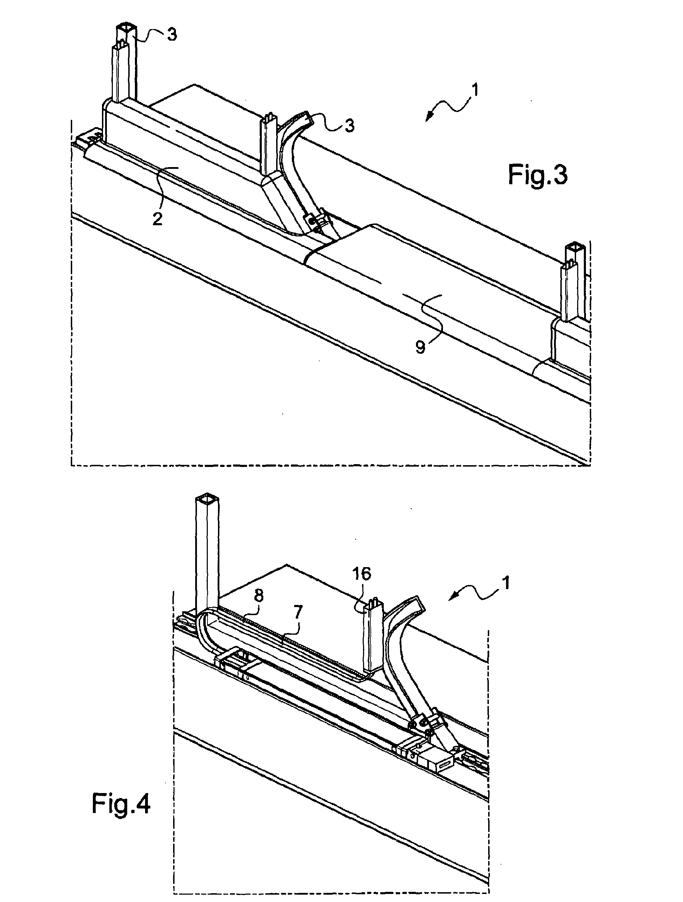

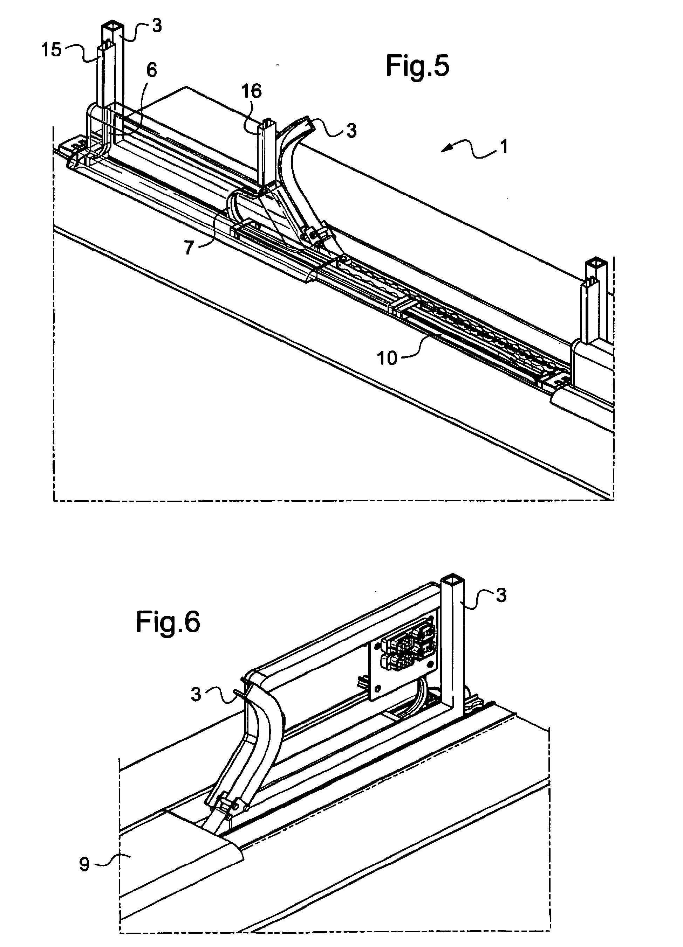

Comme on peut le voir sur les figures 4 et 5, ce boîtier 2 reçoit un faisceau de câbles d'entrée 6 et un faisceau de câbles de sortie 7.

Le boîtier 2 reçoit également une baguette 10 qui peut coulisser entre une position dans laquelle elle est entièrement logée à l'intérieur du boîtier 1, telle que représentée à la figure 1, et une position dans laquelle elle est déployée à l'extérieur du boîtier 1, telle que représentée à la figure 3. Dans l'exemple décrit, la baguette 10 s'étend par exemple sur une longueur comprise entre 0 et 50 cm.

Le boîtier comporte encore un connecteur d'entrée 11 solidaire du boîtier 1.

Lorsque la baguette 10 est déployée, elle peut venir au contact du connecteur d'entrée 11 du siège adjacent, le siège situé derrière dans l'exemple décrit, afin d'assurer le raccordement électriques entre les deux sièges ou, le cas échéant, les deux rangées de sièges de l'aéronef.

Comme on peut le voir dans un premier exemple de mise en oeuvre représenté à la figure 5, le faisceau de câbles d'entrée 6 est relié d'une part au connecteur d'entrée 11 et d'autre part à un équipement électronique non représenté par une sortie 15. Cet équipement électronique peut faire partie, par exemple, du système de divertissement intégré au siège.

Le faisceau de câbles de sortie 7 est, dans l'exemple des figures 1 à 5, connecté d'une part à l'équipement électronique précité par une sortie 16 et, se prolonge à son autre extrémité à l'intérieur de la baguette 10.

Comme on peut le voir sur la figure 5, le faisceau de câbles de sortie 7 présente une certaine réserve 8 à l'intérieur du boîtier 2, lui permettant comme on peut le voir en comparant les figures 4 et 5, d'accompagner le mouvement de la baguette 10 lorsque celle-ci est déployée à l'extérieur du boîtier 1 tout en conservant un rayon de courbure minimum acceptable, par exemple de l'ordre de 25 mm.

Comme on peut le voir à la figure 3, le dispositif de raccordement électrique comporte avantageusement un cache 9 servant à recouvrir la baguette 10 lorsque celle-ci est déployée à l'extérieur du boîtier 1 afin de ne pas la rendre accessible et visible à un passager.

On a représenté à la figure 6 un autre exemple de dispositif de raccordement électrique selon l'invention, qui diffère de l'exemple représenté aux figures précédentes par le fait que l'équipement électronique est intégré à l'intérieur du boîtier 2.

Dans les exemples des figures 1 à 6, le boîtier 2 est configuré pour être posé verticalement sur le plancher de l'aéronef.

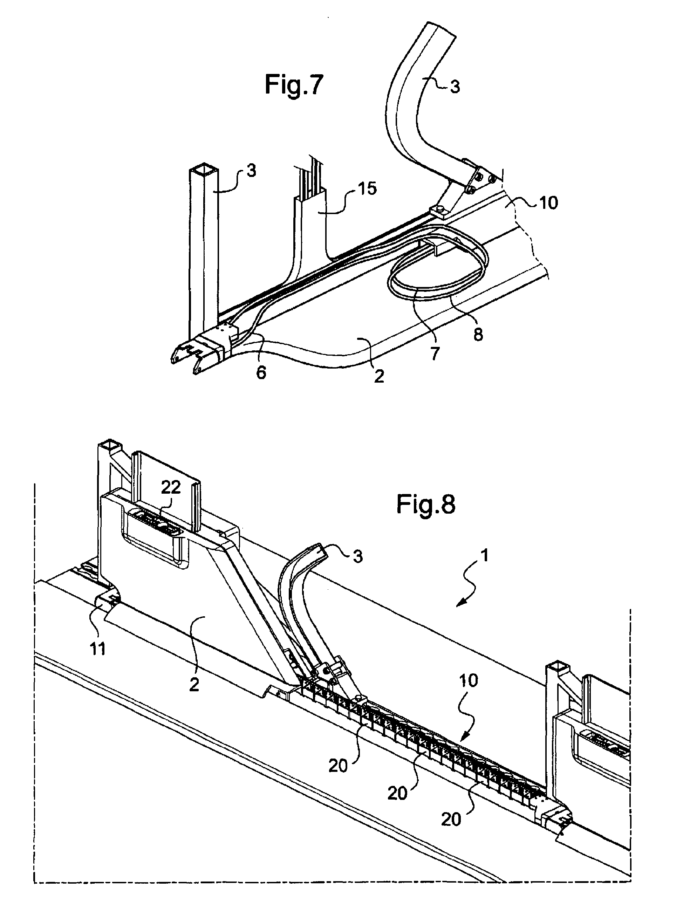

Dans l'exemple de la figure 7, le boîtier est configuré pour être posé horizontalement sur le plancher de l'aéronef.

On a représenté aux figures 8 à 10, un dispositif de raccordement électrique 1 différent de celui représenté aux figures 1 à 7 par le fait que la baguette rétractable 10 comporte une succession d'éléments 20 articulés les unes par rapport aux autres et recevant sur une portion de sa longueur le faisceau de câble de sortie 7. Dans l'exemple illustré, la baguette comporte entre dix et vingt éléments 20, cette succession d'éléments définissant un système de chenille.

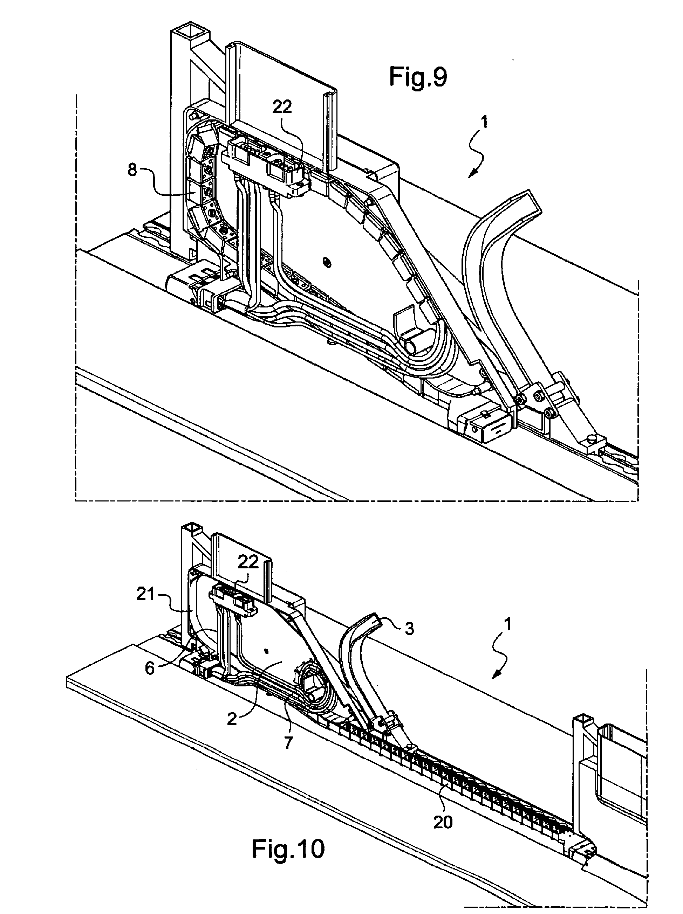

Comme on peut le voir sur les figures 9 et 10 qui représentent respectivement le boîtier lorsque la baguette est rétractée à l'intérieur de ce dernier et lorsque la baguette 10 est déployée vers l'extérieur, le système de chenille permet de maîtriser la courbure du faisceau de câble de sortie 7 lors de son déplacement.

Comme on peut le voir sur les figures 8 à 10, le boîtier peut comporter dans cet exemple des moyens de guidage des éléments 20 lors du déplacement de la baguette 10. Ces moyens de guidage sont par exemple réalisés par une piste 21 aménagée à l'intérieur du boîtier 22 et sur laquelle le système de chenille peut coulisser.

Comme on peut le voir sur les figures 8 à 10, le faisceau de câble d'entrée 6 et le faisceau de câble de sortie 7 sont reliés à un équipement électronique par l'intermédiaire d'un connecteur 22.

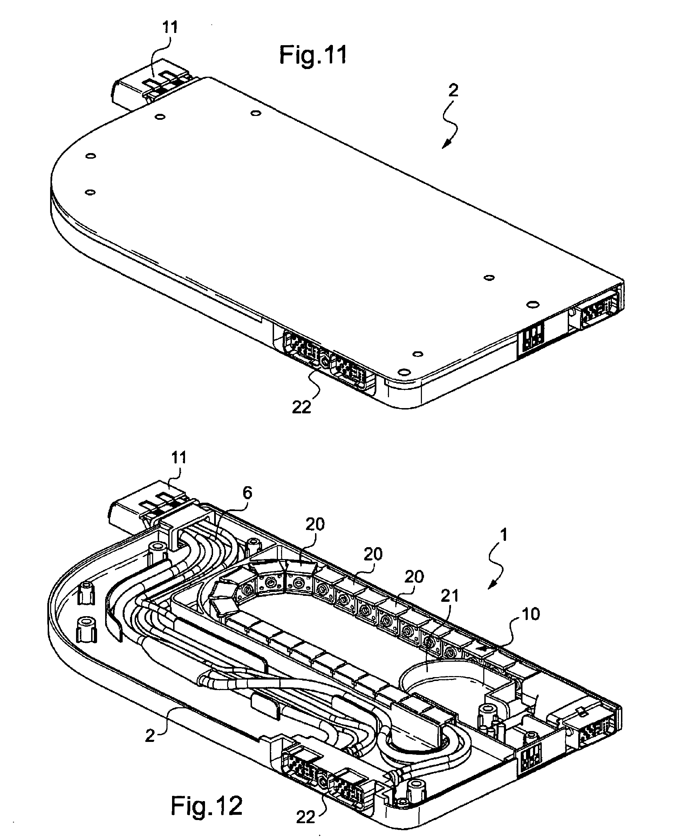

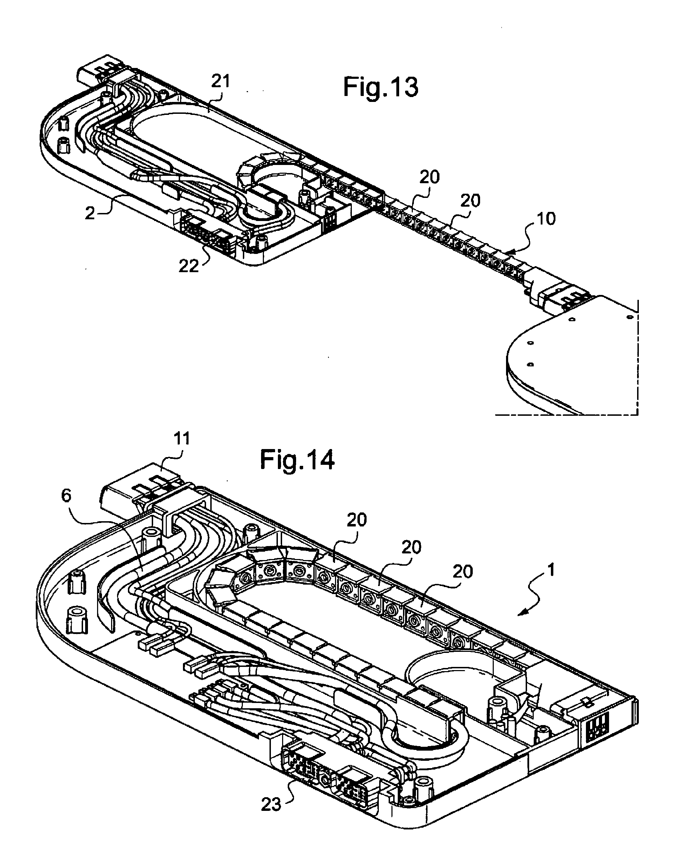

On va maintenant décrire en référence aux figures 11 à 13, un autre exemple de dispositif de raccordement électrique selon l'invention. Le dispositif 1 représenté à la figure 11 comporte un boîtier 2 de forme aplatie, étant par exemple configuré pour être fixé en position horizontale sous le siège. Comme on peut le voir sur les figures 12 et 13, la baguette rétractable 10 du dispositif de raccordement selon cet exemple comporte également une succession d'éléments 20 définissant un système de chenille comme selon l'exemple décrit en référence aux figures 8 à 10. Similairement à l'exemple décrit en référence aux figures 8 à 10, le faisceau de câble d'entrée 6 et le faisceau de câble de sortie 7 sont regroupés au sein d'un connecteur 22 pour être connectés à un équipement électronique non représenté.

On a représenté à la figure 14, une variante du dispositif représenté aux figures 11 à 13 par le fait que, similairement au dispositif de raccordement représenté à la figure 6, l'équipement électronique est intégré à l'intérieur du boîtier 2. Dans cet exemple, le boîtier est relié aux systèmes électriques du siège par l'intermédiaire d'un connecteur 23.

Dans les revendications, l'expression « comportant un » doit être comprise comme synonyme de « comportant au moins un », sauf si le contraire est spécifié.

## Revendications

1. Dispositif de raccordement électrique (1) entre un premier siège et un second siège disposé devant ou derrière le premier siège, notamment dans un aéronef, **caractérisé par le fait qu'**il comporte :
- un boîtier (2) configuré pour être rendu solidaire du premier siège et recevant un faisceau de câbles d'entrée (6) et un faisceau de câbles de sortie (7),
- un connecteur d'entrée (11) de câbles relié au faisceau de câbles d'entrée (6) et solidaire du boîtier (2), et
- une baguette rétractable (10) reçue au moins en partie à l'intérieur du boîtier (2), dans laquelle se prolonge le faisceau de câbles de sortie (7) et pouvant coulisser vers l'extérieur du boîtier (2) de façon à connecter ledit boîtier (2) au connecteur d'entrée (11) de câbles du second siège,
la baguette rétractable comportant une succession d'éléments articulés (20) les uns par rapport aux autres et recevant le faisceau de câbles de sortie sur une portion de sa longueur.

2. Dispositif selon la revendication 1, **caractérisé par le fait que** la baguette (10) est entièrement rétractable à l'intérieur du boîtier (2).

3. Dispositif selon la revendication 1 ou la revendication 2, **caractérisé par le fait que** la baguette (10) s'étend sur une longueur comprise entre 0 et 50 cm.

4. Dispositif selon l'une quelconque des revendications précédentes, **caractérisé par le fait que** le faisceau de câbles de sortie (7) présente une réserve de câbles (8) dans le boîtier (2).

5. Dispositif selon la revendication 4, **caractérisé par le fait que** les câbles utilisés ont un rayon de courbure minimum de l'ordre de 25 mm.

6. Dispositif selon l'une quelconque des revendications 1 à 5, **caractérisé par le fait qu'**il comporte un équipement électronique connecté aux faisceaux de câbles d'entrée (6) et de sortie (7).

7. Dispositif selon la revendication 6, **caractérisé par le fait que** l'équipement électronique est intégré au boîtier (2).

8. Dispositif selon l'une quelconque des revendications précédentes, **caractérisé par le fait qu'**il comporte un cache (9) apte à recouvrir la baguette (10) lorsque celle-ci est déployée à l'extérieur du boîtier (2).

9. Dispositif selon l'une quelconque des revendications précédentes, **caractérisé par le fait que** la succession d'éléments (20) définit un système de chenille.

10. Dispositif selon la revendication 9, **caractérisé par le fait que** le boîtier (2) comporte une piste (21) sur laquelle le système de chenille peut coulisser lorsque la baguette est déplacée.

11. Ensemble comportant :
- un premier siège, et
- un dispositif (1) selon l'une quelconque des revendications 1 à 10, le boîtier (2) étant solidaire du premier siège.

## Claims

1. An electrical connection device (1) for making a connection between a first seat and a second seat disposed in front of or behind the first seat, in particular in aircraft, **characterized in that** it comprises:
• a casing (2) arranged to be secured to the first seat and receiving an inlet cable bundle (6) and an outlet cable bundle (7);
• a cable inlet connector (11) connected to the inlet cable bundle (6) and secured to the casing (2);
and
• a retractable strip (10) received at least in part inside the casing (2), the outlet cable bundle (7), extending in said strip, which strip is capable of sliding outwards from the casing (2) in such a manner as to connect said casing (2) to the cable inlet connector of the second seat (11), wherein the retractable strip comprises a succession of elements hinged relative to one another and receiving the outlet cable bundle over a fraction of its length.

2. A device according to claim 1, **characterized in that** the strip (10) is fully retractable into the inside of the casing (2).

3. A device according to claim 1, **characterized in that** the strip (10) extends over a length lying in the range 0 to 50 cm.

4. A device according to any one of the preceding claims, **characterized in that** the outlet cable bundle (7) presents a reserve length of cable (8) inside the casing (2).

5. A device according to claim 4, **characterized in that** the cables which are used have a minimum bending radius of about 25mm.

6. A device according to any one of claims 1 to 5, **characterized in that** it includes electronic equipment connected to the inlet (6) and outlet (7) cable bundles.

7. A device according to claim 6, **characterized in that** the electronic equipment is incorporated in the casing (2).

8. A device according to any one of the preceding claims, **characterized in that** it includes a cover (9) suitable for covering the strip (10) when deployed outside the casing (2).

9. A device according to any one of the preceding claims, **characterized in that** the succession of elements (20) defines a caterpillar system.

10. A device according to claim 9, **characterized in that** the casing (2) includes a track (21) on which the caterpillar system can slide when the strip is moved.

11. An assembly comprising:
a first seat and
- a device according to any one of claims 1 to 10, the casing (2) being secured to the first seat.

## Patentansprüche

1. Elektrische Anschlussvorrichtung (1) zwischen einem ersten Sitz und einem zweiten Sitz, der von oder hinter dem ersten Sitz angeordnet ist, insbesondere in einem Luftfahrzeug, **gekennzeichnet durch** die folgenden Merkmale:
- ein Gehäuse (2) zur Verbindung mit dem ersten Sitz, welches ein Bündel von Eingangskabeln (6) und ein Bündel von Ausgangskabeln (7) aufnimmt,
- einem Eingangsverbinder (11) für Kabel, die in dem Bündel der Eingangskabel (6) gehalten sind, und der mit dem Gehäuse (2) verbunden ist,
- und einem einziehbaren Stab (10), der zumindest teilweise im Inneren des Gehäuses (2) aufgenommen ist, in welchem sich das Bündel der Ausgangskabel (7) verlängert und zum Außenbereich des Gehäuses (2) verschiebbar ist, derart, dass das Gehäuse (2) mit dem Eingangsverbinder (11) der Kabel des zweiten Sitzes verbunden werden kann, welcher einziehbare Stab (10) eine Abfolge von Elementen (20) umfasst, die miteinander verbunden sind und das Bündel der Ausgangskabel in einem Teil seiner Länge aufnimmt.

2. Vorrichtung gemäß Anspruch 1, **dadurch gekennzeichnet, dass** der Stab (10) vollständig in das Gehäuse (2) einziehbar ist.

3. Vorrichtung gemäß Anspruch 1 oder 2, **dadurch gekennzeichnet, dass** der Stab (10) sich über eine Länge zwischen 0 und 50 cm erstreckt.

4. Vorrichtung gemäß einem der vorhergehenden Ansprüche, **dadurch gekennzeichnet, dass** der Bündel der Ausgangskabel (7) eine Kabeheserve (8) innerhalb des Gehäuses (2) umfasst.

5. Vorrichtung gemäß Anspruch 4, **dadurch gekennzeichnet, dass** die verwendeten Kabel einen minimalen Biegeradius in der Größenordnung von 25 mm aufweisen.

6. Vorrichtung gemäß einem der Ansprüche 1 bis 5, **dadurch gekennzeichnet, dass** die Vorrichtung eine elektronische Einrichtung umfasst, die mit den Bündel der Eingangskabel (6) und der Ausgangskäbel (7) verbunden sind.

7. Vorrichtung gemäß Anspruch 6, **dadurch gekennzeichnet, dass** die elektronische Einrichtung in das Gehäuse (2) integriert ist.

8. Vorrichtung gemäß einem der vorhergehenden Ansprüche, **dadurch gekennzeichnet, dass** die Vorrichtung eine Abdeckung (9) umfasst zur Aufnahme des Stabs (10), durch welche sich der Stab aus dem Gehäuse (2) heraus erstreckt.

9. Vorrichtung gemäß einem der vorhergehenden Ansprüche, **dadurch gekennzeichnet, dass** die Abfolge von Elementen (20) ein Laufkettensystem festlegt.

10. Vorrichtung gemäß Anspruch 9, **dadurch gekennzeichnet, dass** das Gehäuse (2) eine Bahn (21) umfasst, auf welchem das Kettensystem sich verschieben kann, so dass der Stab verschoben wird.

11. Anordnung, umfassend:
- einen ersten Sitz, und
- eine Vorrichtung (1) gemäß einem der Ansprüche 1 bis 10, wobei das Gehäuse (2) mit dem ersten Sitz verbunden ist.
